# EUROPEAN PATENT SPECIFICATION

(11) **EP 3 534 472 B1**
(45) Date of publication and mention of the grant of the patent: **23.03.2022**
(21) Application number: 19150639.3
(22) Date of filing: 08.01.2019
(51) Int. Cl.: H02G 3/08

(54) **ELECTRICAL INSTALLATION BOX**
ELEKTROINSTALLATIONSKASTEN
BOÎTIER D'INSTALLATION ÉLECTRIQUE

(30) Priority: 01.03.2018 IN 201841007784
(43) Date of publication of application: 04.09.2019
(73) Proprietor: Schneider Electric Industries SAS, 92500 Rueil-Malmaison (FR)
(72) Inventor: CHIKKANNA, Manohar, 560073 Karnataka (IN); SACHDEVA, Gurveensingh, 560048 Bangalore (IN); LOKESH, Kushal, 560027 Bangalore (IN)
(74) Representative: Roberts, David

(56) References cited:
- DE-U1-202004 002 027
- FR-A1- 2 723 804
- US-B1- 6 194 659

## Description

### Field of invention:

The present invention relates to electrical installation box. The invented electrical installation box is particularly useful for installation of conduits and cables.

### Background of the invention:

At present an installer has to install a plastic conduit which is snapped on to the box directly or via an accessory. Alternatively, an installer has to install a cable to an electrical box via a retainer which is either integrated to the box or via an accessory.

So the available installation boxes have features either for conduit fixing or features for accommodating flexible cables. It is also known in the art to have provision for an accessory for the conduit or flexible cable. This limits the installer the flexibility in installation of cables and conduits using the same installation box.

With a view, therefore to overcome the disadvantages associated with conventional installation boxes the inventors felt the need to develop a novel installation box which can be used both for installing conduit and cables, such a flexible electrical cables. Hence the installer has more features in a given box compared to the installation boxes presently available. This also eliminates the need for accessories for installation boxes.

The purpose of the invention is to provide the installer with an installation box which is faster to install and flexible with respect to options for the installation of conduits and cables.

Installer has the freedom to fix either a cable or conduit in the same interface. The existing box as interface only for 4 cables and 4 conduits whereas with the new combined interface he can have either all 8 cables or all 8 conduits.

DE 20 2004 002 027 U1 relates to electrical installation material and inserts for cable entries in electrical installation material.

FR 2723804 relates to grommets or the like, that is to say elements which, placed on a support of any kind make it possible to guide and/or maintain an oblong body during its passage through this support.

### Summary of the invention:

Accordingly, the present invention provides an electrical installation box for supporting conduits and cables, the electrical installation box comprising a plurality of facets, each of said facets having sides connectively abutting the sides of an adjacent facet thus forming a hollow box with an open end,
wherein at least one of said facets is provided with a profiled retainer for accommodating cables,
wherein said profiled retainer is formed of alternative long flanges and short flanges protruding toward a centre of said profiled retainer, and
wherein said profiled retainer's periphery is configured to be knocked out for accommodating conduits, when necessary;
   wherein said facet is provided with two opposing conduit locking edges and two opposing conduit support edges to support the conduit once said profiled retainer has been knocked out;
   wherein said conduit support edges and said conduit locking edges are chamfered;
   wherein said conduit support edges have an arced profile and said conduit locking edges have a straight profile;
   wherein a bottom of said electrical installation box is provided with openings for insertion of conduits from the bottom of the box.

According to a preferred embodiment of the invention said long flanges and said short flanges have trapezoidal profile with the base of the trapezoidal flanges disposed near the periphery of said profiled retainer and the apex of the trapezoidal flanges disposed near the centre of said profiled retainer.

According to another embodiment of the invention, the long flanges and the short flanges of said profiled retainer are in the same plane with that of the corresponding facet.

According to a further embodiment of the invention, said profiled retainer's periphery is perforate to be knocked out.

According to still another embodiment of the invention, said profiled retainer's periphery is grooved to be knocked out.

Preferably, in the present invention the long flanges and said short flanges are disposed in spaced apart manner. The long flanges helps to hold cables having small diameter defined and the short flanges support the cable. These short and long flanges bend inwards and hold the cable. While inserting the larger diameter cable the long flanges bent inwards and will come back to its original shape after pulling out the cable.

The short flanges helps to hold cable having large diameter and the long flanges provide support the during the cable insertion. The short and long flanges bend inwards and holds the cable.

The profiled retainer has a flexible groove which gives enough flexibility to the trapezoidal flanges during cable insertion and at the same imparts strength to the installation box to hold the cable.

According to yet another embodiment of the invention, the profiled retainer is provided with a holding feature to hold the trapezoidal flanges together to protect them against damage from external forces during transport and installation. The holding feature inserts even force distribution an all the trapezoidal flanges during cable insertion. The holding feature distributes even force on all the trapezoidal flanges. This holding feature is used to fix pre-determined size of flexible conduit.

### Brief description of the drawings:

For better understanding, an illustrative embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that have been shown in the drawings.

In the accompanying drawings:
Figure 1 is a perspective view of a preferred embodiment of the invented electrical installation box.
Figure 2 is a front view of the preferred embodiment of the invented electrical installation box.
Figures 3 to 5 illustrates cutting of the flexible groove and thereupon knocking out the profiled retainer for accommodating a conduit.
Figure 6 is a top view of a facet of the invented electrical installation box with the profiled retainer.
Figure 7 is a perspective view of a facet of the invented electrical installation box with the profiled retainer.
Figure 8 is the bottom view of the invented electrical installation box.
Figure 9 illustrates how a cable is inserted into the profiled retainer of a facet of the invented electrical installation box.
Figure 10 illustrates the fixing of a conduit into a facet of the invented electrical installation box.
Figure 11 is a cutaway view of the facet.

### Detailed description of the drawings:

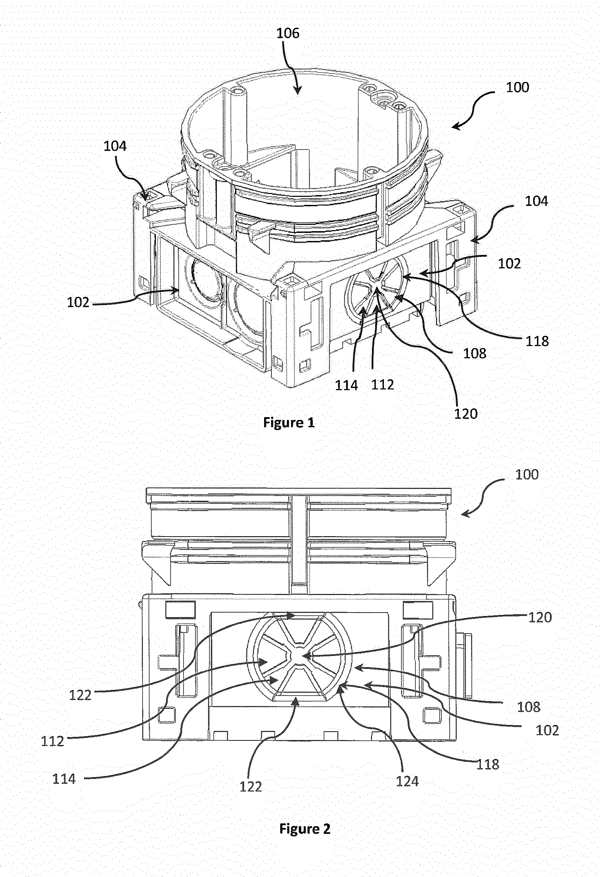

Referring to figures 1 and 2 of the accompanying drawings, the invented electrical installation box (100) for installation of conduits and cables comprises plurality of facets (102). Each of said facets (102) having sides (104) connectively abutting the sides of an adjacent facet thus forming a hollow box with an open end (106). The open end (106) may have a cylindrical profile or any other profile depending on the shape of the electrical device to be mounted thereon. Preferably, a facets (102) abuts with its adjacent facets by means of snap fit arrangement as seen in figures 1 to 5.

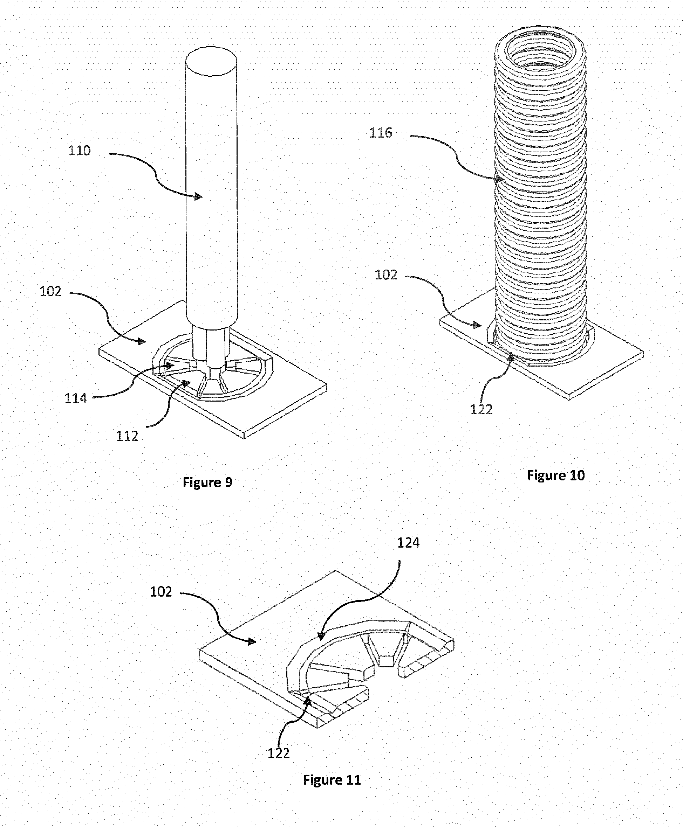

Referring to figures 1 to 3 at least one of said plurality of facets (102) is provided with a profiled retainer (108) for accommodating electrical cables (110) as seen in figure 9.

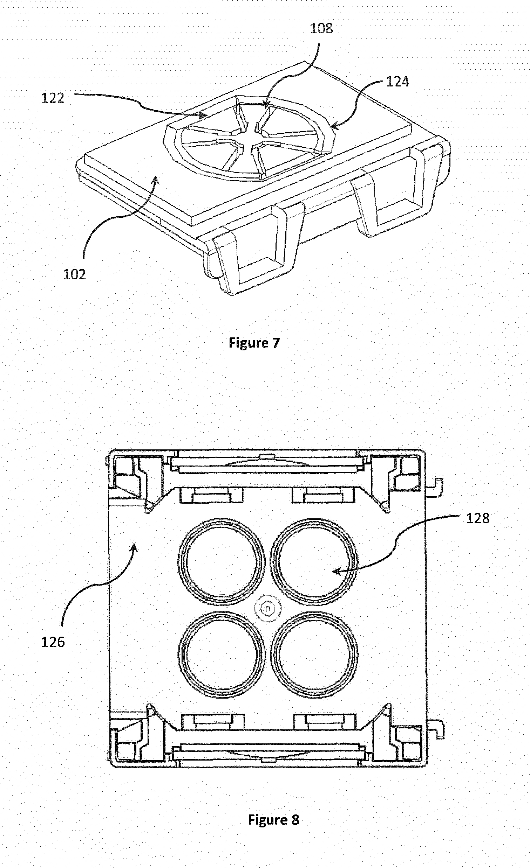

As seen in figures 1 to 3, the profiled retainer (108) is formed of alternative long flanges (112) and short flanges (114) protruding inwardly. The long flanges (112) and short flanges (114) are disposed in spaced apart manner. The profiled retainer's periphery is configured to be knocked out for accommodating conduits (116), when necessary as seen in figure 10. The long flanges (112) and the short flanges (114) have trapezoidal profile with the base of the trapezoidal flanges disposed near the periphery of said profiled retainer and the apex of the trapezoidal flanges disposed near the centre of said profiled retainer (108). Preferably, the long flanges (112) and short flanges (114) of a profiled retainer (108) are in the same plane with that of the corresponding facet (102), as seen in figure 7.

As seen in figures 1, 2, and 6 the profiled retainer (108) has a flexible groove (118) which gives enough flexibility to the trapezoidal flanges (112,114) during cable insertion and at the same imparts strength to the installation box (100) to hold the cable (110).

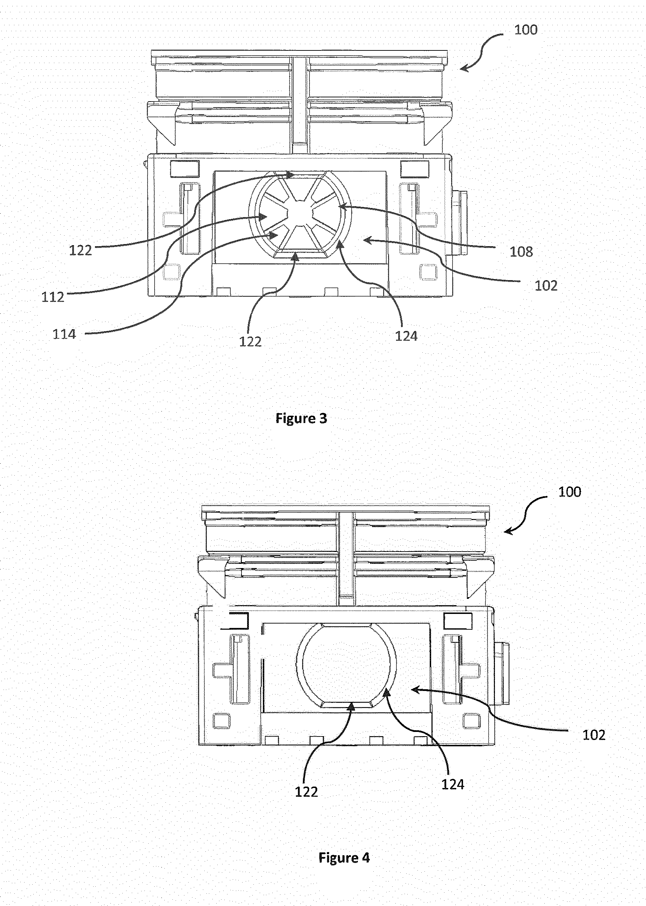

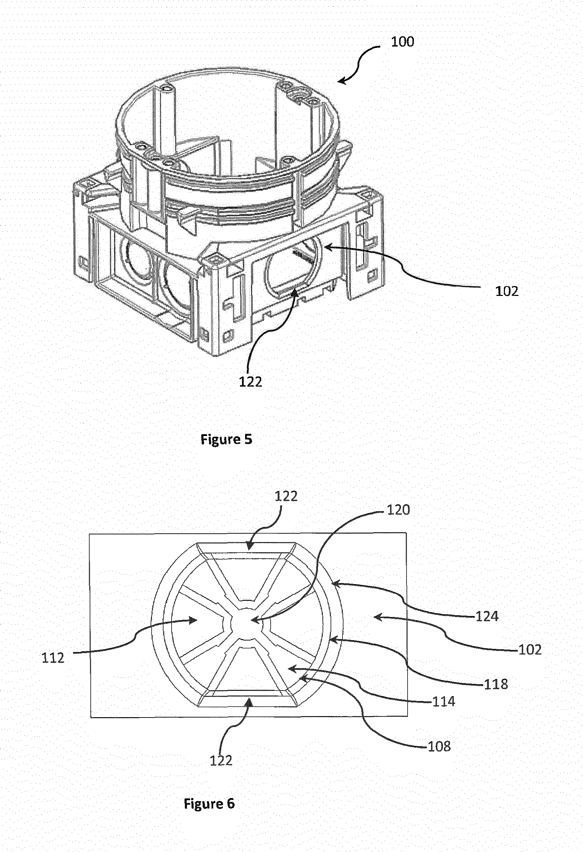

Referring to figures 4 and 5, the profiled retainer (108) can be removed by cutting at the flexible groove (118) which is placed at the end of the profiled retainer (108). After cutting the interface looks like a hole with two opposite flat edges as shown in figure 4 and 5.

The long flanges (112) helps to hold cables having small diameter defined and the short flanges (114) support the cable. These long and short flanges (112,114) bend inwards and hold the cable. While inserting the larger diameter cable the long flanges (112) bent inwards and will come back to its original shape after pulling out the cable. The short flanges (114) helps to hold cable having large diameter and the long flanges provide support the during the cable insertion. The long and short flanges (112,114) have sometimes been referred as trapezoidal flanges, hereinafter.

Referring to figures 1, 2, and 6, the profiled retainer (108) is provided with a holding feature (120) to hold the trapezoidal flanges (112,114) together to protect them against damage from external forces during transport and installation. The holding feature (120) inserts even force distribution an all the trapezoidal flanges (112,114) during cable insertion. The holding feature (120) distributes even force on all the trapezoidal flanges.

Referring to figures 2, 5, 6, and 7 of the accompanying drawings , the profiled retainer (108) is provided with conduit locking edges (122). These conduit locking edges (122) will fix the flexible conduit (116). The distance between the two edges is determined by the inner groove diameter on the flexible conduit (116). The profiled retainer (108) is also provided with conduit support (124) to support the flexible conduit (116). The conduit supports (124) are round shaped and provide support the flexible conduit (116). The dimension of the conduit supports (124) will be defined based on the outer dimension of the conduit (116). This conduit supports (124) are used to fix pre-determined size of flexible conduit (116).

Said conduit support (124) and the conduit locking edges (122) are chamfered, as seen in figure 11 to ensure the different sizes of conduit can be held.

As seen in figure 8, the bottom (126) of the invented electrical installation box (100) is provided with openings (128) for insertion of conduits from the bottom of the box (100).

As already mentioned, the foregoing description is illustrative of the invention and not limitative to its scope, because it will be apparent to persons skilled in the art to devise other alternative embodiments without departing from the broad ambit of the disclosures made herein.

## Claims

1. An electrical installation box (100) for supporting conduits (116) and cables (110), the electrical installation box comprising a plurality of facets (102), each of said facets (102) having sides (104) connectively abutting the sides of an adjacent facet thus forming a hollow box with an open end (106),
wherein at least one of said facets (102) is provided with a profiled retainer (108) for accommodating said cables (110),
wherein said profiled retainer (108) is formed of alternative long flanges (112) and short flanges (114) protruding toward a centre of said profiled retainer (108), and
wherein said profiled retainer's periphery is configured to be knocked out for accommodating conduits (116), when necessary;
wherein said profiled retainer (108) is provided with two opposing conduit locking edges (122) and two opposing conduit support edges (124) to support the conduit (116) once said profiled retainer (108) has been knocked out;
wherein said conduit support edges (124) and said conduit locking edges (122) are chamfered;
wherein said conduit support edges (124) are round shaped and said conduit locking edges (122) are flat edges;
wherein a bottom (126) of said electrical installation box (100) is provided with openings (128) for insertion of conduits from the bottom of the box (100).

2. The electrical installation box (100) as claimed in claim 1, wherein said long flanges (112) and said short flanges (114) have trapezoidal profile with the base of the trapezoidal long and short flanges (112,114) being disposed near the periphery of said profiled retainer (108) and the apex of the trapezoidal long and short flanges (112,114) flanges being disposed near the centre of said profiled retainer (108).

3. The electrical installation box (100) as claimed in any of the above claims 1 and 2,
wherein the long flanges (112) and the short flanges (114) of said profiled retainer (108) are in the same plane with that of a corresponding facet (102).

4. The electrical installation box (100) as claimed in any of the above claims, wherein said profiled retainer's periphery is perforate to be knocked out.

5. The electrical installation box (100) as claimed in any of the above claims 1 to 3, wherein said profiled retainer's periphery is grooved to be knocked out.

6. The electrical installation box (100) as claimed in any of the above claims, wherein said long flanges (112) and said short flanges (114) are disposed in a spaced apart manner.

7. The electrical installation box (100) as claimed in claims 2 to 6, wherein said profiled retainer (108) is provided with a holding feature (120) to hold the trapezoidal long and short flanges (112,114) together to protect them against damage from external forces during transport and installation.

## Patentansprüche

1. Elektroinstallationskasten (100) zum Stützen von Leitungen (116) und Kabeln (110), wobei der elektrische Installationskasten mehrere Facetten (102) aufweist, wobei jede der Facetten (102) Seiten (104) hat, die verbindend an die Seiten einer benachbarten Facette angrenzen, wodurch ein hohler Kasten mit einem offenen Ende (106) gebildet wird,
wobei wenigstens eine der Facetten (102) mit einem profilierten Halter (108) zum Aufnehmen der Kabel (110) versehen ist,
wobei der profilierte Halter (108) aus abwechselnd langen Flanschen (112) und kurzen Flanschen (114) gebildet ist, die in Richtung zu einer Mitte des profilierten Halters (108) vorstehen, und
wobei der Umfang des profilierten Halters ausgestaltet ist, um bei Bedarf zum Aufnehmen von Leitungen (116) herausgedrückt zu werden;
wobei der profilierte Halter (108) mit zwei gegenüberliegenden Leitungsverriegelungskanten (122) und zwei gegenüberliegenden Leitungsstützkanten (124) versehen ist, um die Leitung (116) zu stützen, sobald der profilierte Halter (108) herausgedrückt worden ist;
wobei die Leitungsstützkanten (124) und die Leitungsverriegelungskanten (122) abgeschrägt sind;
wobei die Leitungsstützkanten (124) ein rundgeformt sind und die Leitungsverriegelungskanten (122) ebene Kanten sind;
wobei ein Boden (126) des elektrischen Installationskastens (100) mit Öffnungen (128) zum Einlegen von Leitungen vom Boden des Kastens (100) versehen ist.

2. Elektroinstallationskasten (100) nach Anspruch 1, bei welchem die langen Flansche (112) und die kurzen Flansche (114) ein trapezförmiges Profil haben, wobei die Basis der trapezförmigen langen und kurzen Flansche (112, 114) nahe dem Umfang des profilierten Halters (108) angeordnet ist und die Spitze der trapezförmigen langen und kurzen Flansche (112, 114) nahe der Mitte des profilierten Halters (108) angeordnet sind.

3. Elektroinstallationskasten (100) nach einem der vorstehenden Ansprüche 1 und 2, bei welchem die langen Flansche (112) und kurzen Flansche (114) des profilierten Halters (108) in derselben Ebene wie jene einer entsprechenden Facette liegen (102).

4. Elektroinstallationskasten (100) nach einem der vorstehenden Ansprüche, bei welchem der Umfang des profilierten Halters perforiert ist, um herausgedrückt zu werden.

5. Elektroinstallationskasten (100) nach einem der vorstehenden Ansprüche 1 bis 3, bei welchem der Umfang des profilierten Halters genutet ist, um herausgedrückt zu werden.

6. Elektroinstallationskasten (100) nach einem der vorstehenden Ansprüche, bei welchem die langen Flansche (112) und die kurzen Flansche (114) in einer zueinander beabstandeten Weise angeordnet sind.

7. Elektroinstallationskasten (100) nach einem der Ansprüche 2 bis 6, bei welchem der profilierte Halter (108) mit einem Haltemerkmal (120) versehen ist, um die trapezförmigen langen und kurzen Flansche (112, 114) zusammenzuhalten, um sie vor Beschädigung aus äußeren Kräften während Transport und Installation zu schützen.

## Revendications

1. Boîtier d'installation électrique (100) servant à supporter des conduits (116) et des câbles (110), le boîtier d'installation électrique comportant une pluralité de facettes (102), chacune desdites facettes (102) ayant des côtés (104) se mettant en butée de manière connectée avec les côtés d'une facette adjacente pour ainsi former un boîtier creux avec une extrémité ouverte (106),
dans lequel au moins l'une desdites facettes (102) comporte un dispositif de retenue profilé (108) servant à recevoir lesdits câbles (110),
dans lequel ledit dispositif de retenue profilé (108) est formé à partir de flasques longs (112) et de flasques courts (114) en alternance faisant saillie vers un centre dudit dispositif de retenue profilé (108), et
dans lequel la périphérie dudit dispositif de retenue profilé est configurée pour être enlevée à des fins de réception de conduits (116), lorsque c'est nécessaire ;
dans lequel ledit dispositif de retenue profilé (108) comporte deux bords de verrouillage de conduit opposés (122) et deux bords de support de conduit opposés (124) servant à supporter le conduit (116) une fois que ledit dispositif de retenue profilé (108) a été enlevé ;
dans lequel lesdits bords de support de conduit (124) et lesdits bords de verrouillage de conduit (122) sont chanfreinés ;
dans lequel lesdits bords de support de conduit (124) sont de forme ronde et lesdits bords de verrouillage de conduit (122) sont des bords plats ;
dans lequel une partie inférieure (126) dudit boîtier d'installation électrique (100) comporte des ouvertures (128) servant à des fins d'insertion de conduits depuis la partie inférieure du boîtier (100).

2. Boîtier d'installation électrique (100) selon la revendication 1, dans lequel lesdits flasques longs (112) et lesdits flasques courts (114) ont un profilé trapézoïdal, la base des flasques longs et courts trapézoïdaux (112, 114) étant disposée près de la périphérie dudit dispositif de retenue profilé (108) et le sommet des flasques longs et courts trapézoïdaux (112, 114) étant disposés près du centre dudit dispositif de retenue profilé (108).

3. Boîtier d'installation électrique (100) selon l'une quelconque des revendications ci-dessus 1 et 2, dans lequel les flasques longs (112) et les flasques courts (114) dudit dispositif de retenue profilé (108) sont dans le même plan que celui d'une facette correspondante (102).

4. Boîtier d'installation électrique (100) selon l'une quelconque des revendications ci-dessus, dans lequel la périphérie dudit dispositif de retenue profilé est perforée pour être enlevée.

5. Boîtier d'installation électrique (100) selon l'une quelconque des revendications ci-dessus 1 à 3, dans lequel la périphérie dudit dispositif de retenue profilé est rainurée pour être enlevée.

6. Boîtier d'installation électrique (100) selon l'une quelconque des revendications ci-dessus, dans lequel lesdits flasques longs (112) et lesdits flasques courts (114) sont disposés d'une manière espacée.

7. Boîtier d'installation électrique (100) selon l'une quelconque des revendications 2 à 6, dans lequel ledit dispositif de retenue profilé (108) comporte un dispositif de maintien (120) servant à maintenir les flasques longs et courts trapézoïdaux (112, 114) ensemble pour les protéger contre toute détérioration par des forces externes lors du transport et de l'installation.
